# EUROPEAN PATENT APPLICATION

(11) **EP 4 178 093 A1**
(43) Date of publication of application: **10.05.2023**
(21) Application number: 21860840.4
(22) Date of filing: 23.03.2021
(51) Int. Cl.: H02K 15/03, H02K 15/12, H02K 1/27

(54) **ROTOR CORE MANUFACTURING METHOD**

(30) Priority: 27.08.2020 JP 2020143912
(71) Applicant: AISIN CORPORATION, Kariya-shi, Aichi 448-8650 (JP); TOYOBO CO., LTD., Osaka-shi Osaka 5300001 (JP)
(72) Inventor: HAYASHI, Naotaka, Kariya-shi, Aichi 448-8650 (JP); SABURI, Toshiyuki, Kariya-shi, Aichi 448-8650 (JP); TANIGAWA, Masahito, Otsu-shi, Shiga 520-0292 (JP); FUNAOKA, Daiki, Nagoya-shi, Aichi 452-0805 (JP); OYAMA, Tomohito, Tokyo 102-0094 (JP); OZAWA, Yuichi, Hiratsuka-shi, Kanagawa 254-0016 (JP); UETA, Ryo, Hiratsuka-shi, Kanagawa 254-0016 (JP); SAKURABA, Yusaku, Hiratsuka-shi, Kanagawa 254-0016 (JP)
(74) Representative: Kramer Barske Schmidtchen Patentanwälte PartG mbB
(86) International application number: PCT/JP2021/012065
(87) International publication number: WO 2022/044408

(57) **Abstract**

This method for manufacturing a rotor core includes an injection step of injecting a molten resin material into a magnet housing portion of a laminated core heated to a third temperature by a preheating step. The injection step is a step of injecting the resin material into the magnet housing portion while releasing to the outside of the magnet housing portion a volatile organic compound volatilized by heating the resin material by bringing the resin material into contact with the laminated core heated to the third temperature.

## Description

### TECHNICAL FIELD

The present invention relates to methods for manufacturing a rotor core.

### BACKGROUND ART

Conventionally, a method for manufacturing a rotor core is known in which a resin material is injected into magnet housing portions in which permanent magnets are inserted. Such a method for manufacturing a rotor core is disclosed in, for example, Japanese Patent No. 6249468 (JP 6249468 B).

In a rotor described in JP 6249468 B, magnets are inserted in hole portions of the rotor core. A fixing member is provided in each gap between the hole portion and the magnet. The fixing member is composed of a fixing resin composition containing a thermosetting resin (epoxy resin), a curing agent, and an inorganic filler. The fixing resin composition contains, in addition to these substances, a mold release agent such as zinc stearate and a volatile organic compound derived from additives including these.

The magnets are inserted into the hole portions of the rotor core after the rotor core is preheated. Thereafter, the rotor core is sandwiched between an upper die and a lower die, and each gap between the hole portion and the magnet is filled with the resin through flow paths provided in the upper die. While being filled with the resin, the rotor core is heated by thermal conduction from the upper and lower dies to a temperature suitable for curing the resin material. The fixing resin composition is thus cured to form the fixing members.

### Related Art Documents

Patent Documents

Patent Document 1: Japanese Patent No. 6249468 (JP 6249468 B)

### SUMMARY OF THE INVENTION

### Problem to be Solved by the Invention

In the method for manufacturing a rotor core described in JP 6249468 B, the thermosetting resin contains a volatile organic compound as described above. Therefore, the volatile organic compound contained in the thermosetting resin may be volatilized while the thermosetting resin injected in the hole portions of the rotor core is cured by heating. In this case, the volatilized volatile organic compound may not escape to the outside of the thermosetting resin and may remain as bubbles inside the thermosetting resin. The force for fixing the magnets (permanent magnets) can be increased by removing these bubbles.

The present invention was made to solve the above problem, and it is one object of the present invention to provide a method for manufacturing a rotor core in which a force for fixing a permanent magnet can be increased in a rotor core in which a resin material containing a volatile organic compound has been injected in a laminated core.

### Means for Solving the Problem

In order to achieve the above object, a method for manufacturing a rotor core according to one aspect of the present invention is a method for manufacturing a rotor core including a laminated core in which a plurality of electrical steel plates is stacked and that includes a magnet housing portion extending in a stacking direction of the electrical steel plates, a permanent magnet placed in the magnet housing portion, and a thermosetting resin material that fixes the permanent magnet inside the magnet housing portion, that is solid at normal temperature and starts to melt at a first temperature higher than the normal temperature, and that starts to cure at a second temperature higher than the first temperature. The method includes: a preheating step of preheating the laminated core in such a manner that a temperature of the laminated core becomes a third temperature that is equal to or higher than a volatilization temperature of a volatile organic compound contained in the resin material; an injection step of injecting the resin material in a molten state into the magnet housing portion of the laminated core heated to the third temperature by the preheating step; and a fixing step of thermally curing the resin material and fixing the permanent magnet inside the magnet housing portion by heating the resin material injected in the magnet housing portion at a fourth temperature higher than the third temperature. The injection step is a step of injecting the resin material into the magnet housing portion while volatilizing the volatile organic compound by heating the resin material by bringing the resin material into contact with the laminated core heated to the third temperature, and while releasing the volatilized volatile organic compound to outside of the magnet housing portion.

In the method for manufacturing a rotor core according to the one aspect of the present invention, as described above, the step of injecting the resin material into the magnet housing portion while volatilizing the volatile organic compound by heating the resin material by bringing the resin material into contact with the laminated core heated to the third temperature that is equal to or higher than the volatilization temperature of the volatile organic compound, and while releasing the volatilized volatile organic compound to the outside of the magnet housing portion is performed. With this structure, the volatile organic compound contained in the resin material can be volatilized and released to the outside of the magnet housing portion in the injection step before the resin material is heated in the fixing step. As a result, since the volatile organic compound has thus been released, the volatile organic compound can be prevented from being volatilized when the resin material is heated in the fixing step after the injection step. The volatilized volatile organic compound can thus be prevented from remaining as bubbles inside the resin material without escaping to the outside of the resin material. As a result, the force for fixing the permanent magnet can be increased in the rotor core in which the resin material containing the volatile organic compound has been injected into the laminated core.

Since the volatile organic compound can be prevented from remaining as bubbles inside the resin material, the resin material can be prevented from leaking through gaps in the laminated core (from between the electrical steel plates) due to expansion of the volume of the resin material caused by volatilization of the volatile organic compound. In the case where a jig (die) for pressing the laminated core is used, the resin material can be prevented from leaking from between the jig (die) and the laminated core. This can save the trouble of removing the leaked resin material.

### Effects of the Invention

According to the present invention, the force for fixing the permanent magnet can be increased in the rotor core in which the resin material containing the volatile organic compound has been injected into the laminated core.

### BRIEF DESCRIPTION OF THE DRAWINGS

[FIG. 1] FIG. 1 is a plan view showing the configuration of a rotor (rotating electrical machine) according to an embodiment.
[FIG. 2] FIG. 2 is a sectional view showing a jig that presses a laminated core and a finished rotor core placed in the jig according to the embodiment.
[FIG. 3] FIG. 3 is a plan view showing the configuration of a lower plate of the jig that presses the rotor core according to the embodiment.
[FIG. 4] FIG. 4 is a plan view showing gas release grooves in the lower plate according to the embodiment.
[FIG. 5] FIG. 5 is a partially enlarged view of FIG. 4.
[FIG. 6] FIG. 6 is a sectional view taken along line 2000-2000 in FIG. 5.
[FIG. 7] FIG. 7 is a schematic diagram showing the configuration of a system for manufacturing a rotor core according to the embodiment.
[FIG. 8] FIG. 8 is a sectional view showing an induction heating coil and a resin injection device according to the embodiment.
[FIG. 9] FIG. 9 is a flowchart illustrating a method for manufacturing a rotor core according to the embodiment.
[FIG. 10] FIG. 10 is a diagram showing the relationship between each step and the temperature of a resin material according to the embodiment.
[FIG. 11] FIG. 11 is a diagram showing components of volatile gas generated by heating the resin material according to the embodiment.
[FIG. 12] FIG. 12 is a diagram showing the relationship between the heating temperature and a change in weight of the resin material over time according to the embodiment.

### MODES FOR CARRYING OUT THE INVENTION

Hereinafter, an embodiment of the present invention will be described with reference to the drawings.

### [Embodiment]

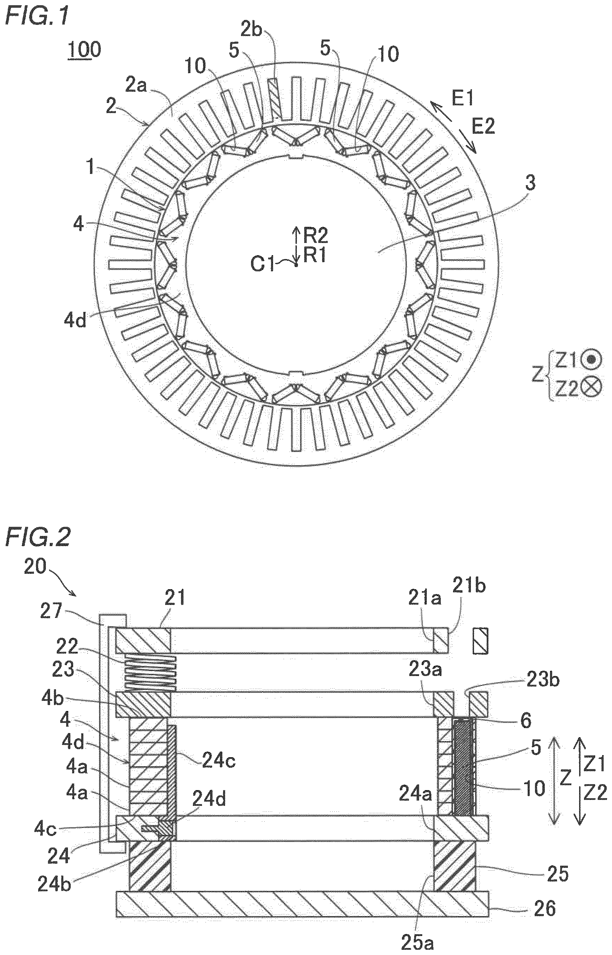

A method for manufacturing a rotor core 4 according to the present embodiment will be described with reference to FIGS. 1 to 10.

In the present specification, the "axial direction" means the direction along a rotation axis C1 of a rotor 1 (rotor core 4) and means the Z direction in the drawings. The "stacking direction" means the direction in which electrical steel sheets 4a (see FIG. 2) of the rotor core 4 are stacked on top of each other, and means the Z direction in the drawings. The "radial direction" means the radial direction (R1 direction or R2 direction) of the rotor 1 (rotor core 4), and the "circumferential direction" means the circumferential direction (E1 direction or E2 direction) of the rotor 1 (rotor core 4).

### (Structure of Rotor Core)

First, the structure of the rotor core 4 according to the present embodiment will be described with reference to FIG. 1.

As shown in FIG. 1, a rotating electrical machine 100 includes the rotor 1 and a stator 2. The rotor 1 and the stator 2 are each formed in an annular shape. The rotor 1 is disposed so as to face the radially inner side of the stator 2. That is, in the present embodiment, the rotating electrical machine 100 is configured as an inner rotor type rotating electrical machine. A shaft 3 is disposed radially inside the rotor 1. The shaft 3 is connected to an engine or an axle via a rotational force transmission member such as a gear. For example, the rotating electrical machine 100 is configured as a motor, a generator, or a motor generator, and is configured to be mounted on a vehicle.

The rotor core 4 includes a laminated core 4d formed by stacking a plurality of electrical steel sheets 4a (see FIG. 2) and having a magnet housing portion 10 extending in the stacking direction of the electrical steel sheets 4a. The rotor core 4 includes permanent magnets 5 inserted in the magnet housing portions 10 of the laminated core 4d. A plurality (32 in the present embodiment) of the magnet housing portions 10 is provided in the laminated core 4d. That is, the rotating electrical machine 100 is configured as an interior permanent magnet motor (IPM motor). The magnet housing portions 10 are disposed in a radially outer portion of the laminated core 4d (rotor core 4). Two magnet housing portions 10 that are adjacent to each other are arranged in a V-shape. The arrangement of the magnet housing portions 10 is not limited to this.

The stator 2 includes a stator core 2a and a coil 2b disposed in the stator core 2a. The stator core 2a is composed of, for example, a plurality of electrical steel sheets (silicon steel sheets) stacked on top of each other in the axial direction, and is configured to allow magnetic flux to pass therethrough. The coil 2b is connected to an external power supply unit, and is configured to be supplied with electric power (e.g. three-phase alternating current electric power). The coil 2b is configured to generate a magnetic field when supplied with electric power. The rotor 1 and the shaft 3 are configured to rotate with respect to the stator 2 as an engine etc. is driven, even when no electric power is supplied to the coil 2b. Although only a part of the coil 2b is illustrated in FIG. 1, the coil 2b is disposed along the entire circumference of the stator core 2a.

The permanent magnets 5 are rectangular in cross section that is orthogonal to the axial direction of the laminated core 4d (rotor core 4). For example, the permanent magnets 5 are configured so that their magnetization direction (magnetized direction) is the lateral direction of the permanent magnets 5.

The rotor core 4 includes a resin material 6 (see FIG. 2) filling the magnet housing portions 10. The resin material 6 is provided so as to fix the permanent magnets 5 disposed in the magnet housing portions 10. The resin material 6 is made of a material (thermosetting resin) that starts to melt at a temperature T1 (e.g., 60°C) and starts to cure at a temperature T2 (e.g., 120°C) higher than the temperature T1. Specifically, the resin material 6 is solid (in the form of flakes, pellets, powder, etc.) at normal temperature lower than the temperature T1, and melts when the resin material 6 is heated from normal temperature to a temperature equal to or higher than the temperature T1. The resin material 6 is configured to maintain its molten state (not to cure) at the temperature T1 or more and less than the temperature T2. The resin material 6 is configured to cure when heated to a temperature equal to or higher than the temperature T2. In FIG. 1, the resin material 6 is not illustrated for simplicity. The temperature T1 and the temperature T2 are examples of the "first temperature" and the "second temperature" in the claims, respectively.

For example, a synthetic resin material such as that described in Japanese Unexamined Patent Application Publication No. 2019-89871 (JP 2019-89871 A) can be used as the resin material 6. That is, the resin material 6 contains, for example, urethane acrylate, a radical polymerizable monomer such as acrylic acid ester as a monomer, an inorganic filler (filler), a silane coupling agent, a reaction initiator, a reaction inhibitor, a stearic acid compound as a mold release agent (lubricant), etc. The above components of the resin material 6 include a volatile organic compound. The resin material 6 is a thermosetting resin. The volatile organic compound itself or a volatile organic compound produced by thermal decomposition is volatilized when the curing reaction of the resin material 6 is accelerated by heating. The resin material to be used is not limited to this. For example, an epoxy resin etc. may be used.

### (Structure of Jig)

Next, the structure of a jig 20 according to the present embodiment will be described with reference to FIGS. 2 to 6. In the following description, the structure of the jig 20 with the laminated core 4d placed in the jig 20 will be described. The jig 20 is an example of the "pressing portion" in the claims.

As shown in FIG. 2, the jig 20 includes an upper plate 21, a pressing spring 22, a pressing plate 23, a lower plate 24, a heat insulating member 25, a positioning plate 26, and a clamp member 27. Each of the upper plate 21, the pressing plate 23, the lower plate 24, and the positioning plate 26 is made of SUS (stainless steel). The pressing plate 23 and the lower plate 24 are examples of the "plate on one side" and the "plate on the other side" in the claims, respectively.

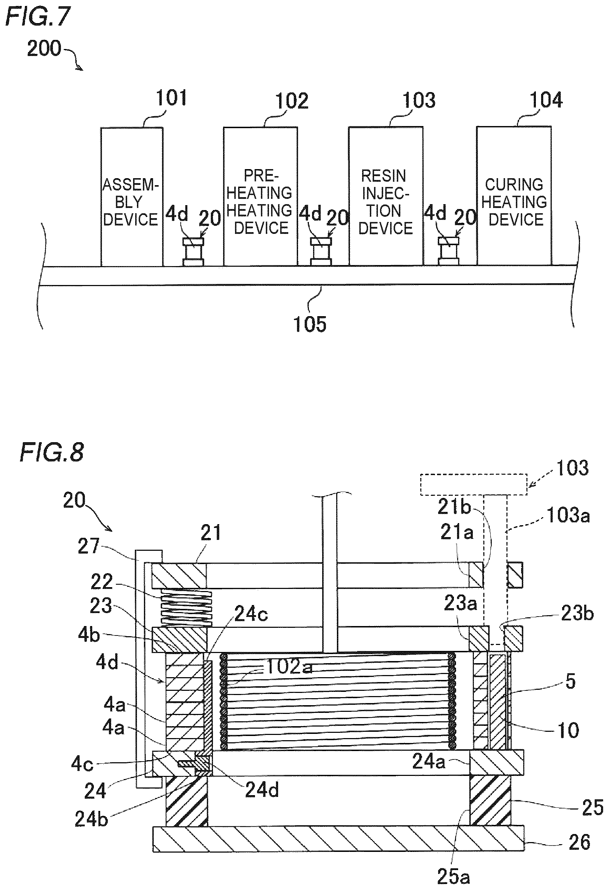

The upper plate 21 has a through hole 21a in the center and is formed in an annular shape. The upper plate 21 includes a plurality of resin injection holes 21b. The resin injection holes 21b are provided so that a nozzle 103a of a resin injection device 103 (see FIG. 8) that will be described later can be inserted therethrough. The resin injection holes 21b are provided so as to overlap the plurality of (32 in the present embodiment) magnet housing portions 10.

An induction heating coil 102a (see FIG. 8) of a preheating heating device 102 (see FIG. 7) that will be described later is inserted radially inside the laminated core 4d through each of the through hole 21a of the upper plate 21 and a through holes 23a of the pressing plate 23 that will be described later. An induction heating coil, not shown, provided in a curing heating device 104 (see FIG. 7) is also similarly inserted radially inside the laminated core 4d through each of the through hole 21a of the upper plate 21 and the through holes 23a of the pressing plate 23 that will be described later.

The pressing spring 22 is provided between the upper plate 21 and the pressing plate 23. A plurality of the pressing springs 22 is provided at equal angular intervals in the circumferential direction as viewed in the direction of the rotation axis C1. Four pressing springs 22 are provided in the present embodiment. Each of the plurality of pressing springs 22 is provided at such a position that the pressing spring 22 overlaps the laminated core 4d as viewed from above (Z1 direction side) with the laminated core 4d placed in the jig 20.

The pressing plate 23 is disposed on an upper end face 4b of the laminated core 4d. The pressing plate 23 is provided so as to press the laminated core 4d from one side (Z1 side) in the axial direction. Specifically, the pressing plate 23 is provided so as to press the upper end face 4b of the laminated core 4d by the biasing force of the pressing springs 22.

The pressing plate 23 has the through hole 23a in the center and is formed in an annular shape. The pressing plate 23 includes a plurality of resin injection holes 23b. The plurality of resin injection holes 23b is provided at such a position that the plurality of resin injection holes 23b overlaps the plurality of resin injection holes 21b of the upper plate 21 as viewed from above (Z1 direction side). The plurality of resin injection holes 23b are provided so that a distal end of the nozzle 103a of the resin injection device 103 that will be described later can be inserted therein (see FIG. 8).

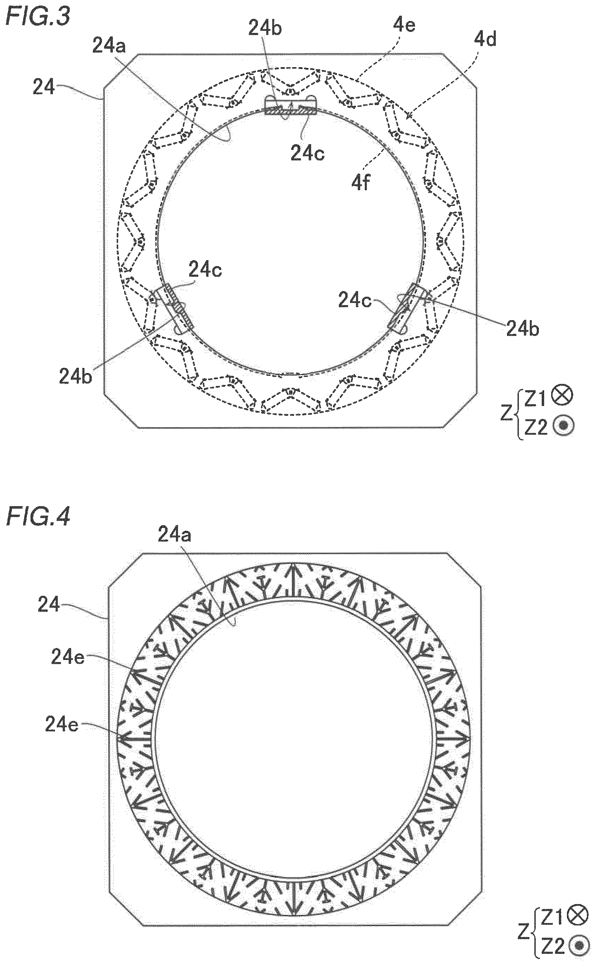

The lower plate 24 is provided so as to support the laminated core 4d from the other side (Z2 side) in the axial direction. That is, the laminated core 4d is disposed (placed) on the lower plate 24. The lower plate 24 is in contact with a lower end face 4c of the laminated core 4d. The lower plate 24 has a through hole 24a in the center and is formed in an annular shape. The lower plate 24 includes a plurality of (three in the present embodiment) cut portions 24b. The plurality of cut portions 24b is provided at substantially equal angular intervals (see FIG. 3) at the inner peripheral edge of the through hole 24a.

An L-shaped positioning portion 24c is provided in each of the plurality of cut portions 24b. The radial and circumferential positions of the laminated core 4d with respect to the lower plate 24 are determined by the plurality of positioning portions 24c. The positioning portions 24c are fixed (fastened) to the lower plate 24 by fastening bolts 24d.

The heat insulating member 25 is provided so as to be sandwiched between the lower plate 24 and the positioning plate 26. The heat insulating member 25 has a through hole 25a in the center and is formed in an annular shape. The heat insulating member 25 is made of resin.

The positioning plate 26 is provided below (Z2 direction side) the lower plate 24. The positioning plate 26 is used to position the jig 20 in each device (101 to 104) that will be described later.

The clamp member 27 has a U-shape and is provided so as to hold the upper plate 21 and the lower plate 24 together. The upper plate 21 and the lower plate 24 are thus pressed while sandwiching the laminated core 4d therebetween. That is, the laminated core 4d is fixed to the jig 20. A plurality (four in the present embodiment) of the clamp members 27 is provided. The plurality of clamp members 27 is provided at substantially equal angular intervals (that is, 90 degree intervals) in the circumferential direction as viewed in the direction of the rotation axis C1.

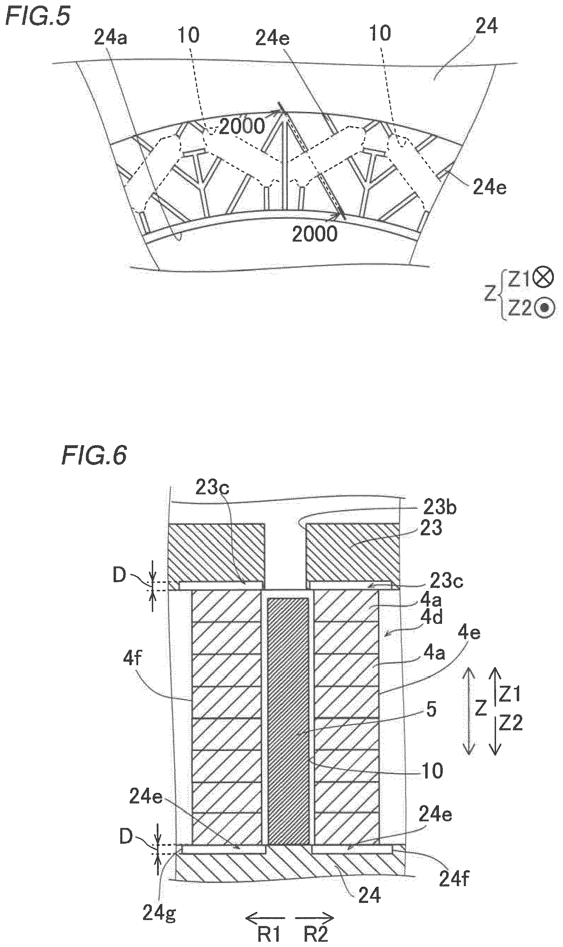

As shown in FIG. 4, a gas release groove 24e through which gas in the magnet housing portion 10 is released (discharged) out of the magnet housing portion 10 is formed in the lower plate 24. The gas release groove 24e is connected to the magnet housing portion 10 (see FIG. 6) with the laminated core 4d placed on the lower plate 24. A plurality of the gas release grooves 24e is provided so as to intersect (see FIG. 5) with each of the plurality of magnet housing portions 10 as viewed in plan. The gas release grooves 24e are provided so as to extend both radially inward and radially outward of the magnet housing portions 10.

As shown in FIG. 6, a radial outer end 24f of the gas release groove 24e provided radially outward of the magnet housing portion 10 is located radially outward of an outer peripheral edge 4e of the laminated core 4d. A radial inner end 24g of the gas release groove 24e provided radially inward of the magnet housing portion 10 is located radially inward of an inner peripheral edge 4f of the laminated core 4d. The volatilized volatile organic compound from the magnet housing portions 10 is thus released to the outside of the laminated core 4d via the gas release grooves 24e. The above configuration of the gas release grooves 24e is illustrative. The gas release grooves 24e are not limited to the above configuration as long as the volatilized volatile organic compound can be released to the outside of the laminated core 4d through the gas release grooves 24e.

As shown in FIG. 6, the gas release grooves 24e have a depth D in the axial direction. The depth D is, for example, several tens of micrometers. The depth D of the gas release grooves 24e is such a depth that gas (volatilized volatile organic compound and air) can be discharged and the resin material 6 does not flow out.

Gas release grooves 23c are formed in the pressing plate 23. Since the configuration of the gas release grooves 23c and the arrangement of the gas release grooves 23c as viewed in the axial direction are similar to those of the gas release grooves 24e of the lower plate 24, detailed description thereof will be omitted.

### (System for Manufacturing Rotor Core)

Next, a system 200 for manufacturing the rotor core 4 will be described with reference to FIGS. 7 and 8.

As shown in FIG. 7, the system 200 for manufacturing the rotor core 4 includes an assembly device 101, the preheating heating device 102, the resin injection device 103, and the curing heating device 104. The system 200 for manufacturing the rotor core 4 further includes a transport conveyor 105 that transports the laminated core 4d. The assembly device 101, the preheating heating device 102, the resin injection device 103, and the curing heating device 104 are separate devices.

The assembly device 101 is configured to place (mount) the laminated core 4d in the jig 20. Specifically, the assembly device 101 is configured to place the laminated core 4d in the jig 20 and to place (insert) the permanent magnets 5 into the magnet housing portions 10.

The preheating heating device 102 is configured to preheat the laminated core 4d by heating. Specifically, the laminated core 4d and the jig 20 (pressing plate 23 and lower plate 24) are preheated by heating with the induction heating coil 102a (see FIG. 8) of the preheating heating device 102. Preheating will be described in detail later.

The resin injection device 103 is configured to inject the resin material 6 into the magnet housing portions 10. Specifically, the resin injection device 103 is configured to inject the resin material 6 melted at the temperature T1 or higher into the magnet housing portions 10 with the laminated core 4d placed in the jig 20 and with the permanent magnets 5 inserted in the magnet housing portions 10. More specifically, with the distal end of the nozzle 103a (see FIG. 8) of the resin injection device 103 inserted in the resin injection hole 23b of the pressing plate 23, the molten resin material 6 ejected from the nozzle 103a is injected into the magnet housing portion 10.

The curing heating device 104 is configured to cure the resin material 6 in the magnet housing portions 10 by heating the laminated core 4d. Specifically, the curing heating device 104 is configured to cure the resin material 6 in the magnet housing portions 10 by heating the laminated core 4d placed in the jig 20 and having the resin material 6 injected in the magnet housing portions 10 at a temperature equal to or higher than the temperature T2 that is the curing temperature of the resin material 6.

### (Method for Manufacturing Rotor)

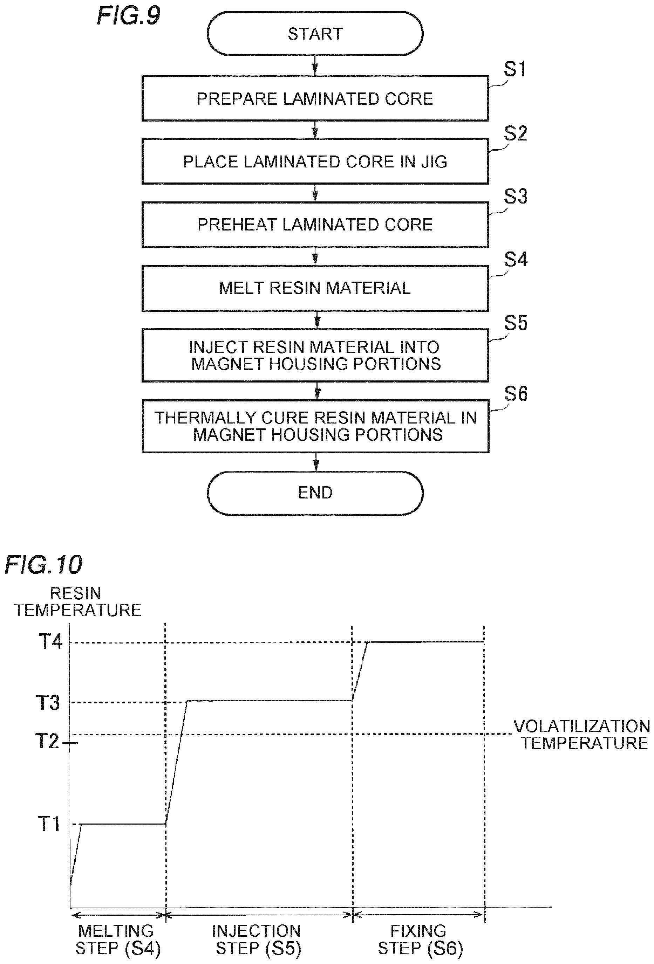

Next, a method for manufacturing the rotor core 4 will be described with reference to FIGS. 9 and 10.

First, as shown in FIG. 9, the step of preparing the laminated core 4d is performed in step S1. Specifically, the laminated core 4d is formed by stacking the plurality of electrical steel sheets 4a (see FIG. 2). At this time, the magnet housing portions 10 extending in the stacking direction of the electrical steel sheets 4a are formed in the laminated core 4d by press work.

Next, in step S2, the step of placing the laminated core 4d in the jig 20 is performed by the assembly device 101. Specifically, the laminated core 4d is first disposed (placed) on the lower plate 24. Next, with the laminated core 4d placed on the lower plate 24, the permanent magnets 5 are placed in the magnet housing portions 10. Then, the lower plate 24 and the upper plate 21 are clamped (connected) by the clamp member 27, and the upper end face 4b of the laminated core 4d is pressed by the pressing plate 23.

Thereafter, a preheating step of preheating the laminated core 4d is performed in step S3. Specifically, the preheating step is the step of heating the laminated core 4d so that the temperature of the laminated core 4d becomes a temperature T3 that is equal to or higher than the volatilization temperature of the volatile organic compound contained in the resin material 6. Accordingly, since the resin material 6 is injected into the laminated core 4d heated to the temperature T3 in an injection step that will be described below, the molten state of the resin material 6 is maintained, and the volatile organic compound contained in the resin material 6 is volatilized. For example, in the present embodiment, the volatilization temperature of the volatile organic compound is about 125°C, and the temperature T3 is 140°C. The temperature T3 is an example of the "third temperature" in the claims.

In the present embodiment, the preheating step is the step of preheating the laminated core 4d so that the temperature of the laminated core 4d becomes the temperature T3 that is higher than the temperature T1 (60°C) at which the resin material 6 starts to melt and lower than a temperature T4 (e.g., 175°C) that is a heating temperature in a fixing step (S6) that will be described below.

Since the laminated core 4d is thus preheated at the temperature T3 higher than the temperature T1 at which the resin material 6 starts to melt, the temperature of the laminated core 4d can be relatively quickly raised and the resin material 6 can be quickly thermally cured in the fixing step. Therefore, the resin material 6 can be relatively quickly cured in the fixing step while preventing, as much as possible, the resin material 6 from curing during injection of the resin material 6. The temperature T4 is an example of the "fourth temperature" in the claims.

The temperature T3 that is the heating temperature in the preheating step is higher than the temperature T2 (120°C) at which the resin material 6 starts to cure.

Since the laminated core 4d is thus preheated at the temperature T3 higher than the temperature T2 at which the resin material 6 starts to cure, the temperature of the laminated core 4d can be more quickly raised and the resin material 6 can be more quickly thermally cured in the fixing step. The temperature T3 that is the heating temperature in the preheating step is lower than the temperature range suitable for thermal curing of the resin material 6. That is, curing of the resin material 6 can be reduced during injection of the resin material 6.

Specifically, the preheating step is the step of preheating the laminated core 4d so that the temperature of the laminated core 4d becomes the temperature T3 that is closer to the temperature T2 at which the resin material 6 starts to cure than the middle temperature ((T2 + T4)/2) between the temperature T2 and the temperature T4 that is the temperature at which the laminated core 4d is heated in the fixing step that will be described below (see FIG. 10). For example, when the temperature T4 is 175°C as described above, the middle temperature between the temperature T2 (120°C) and the temperature T4 is 147.5°C. Therefore, the temperature T3 (140°C) is a temperature between the middle temperature (147.5°C) and the temperature T2 (120°C).

The resin material 6 can thus be more reliably prevented from curing during injection of the resin material 6 than in the case where the heating temperature (T3) in the preheating step is closer to the temperature T4 than the middle temperature between the temperature T2 and the temperature T4.

In the present embodiment, the preheating step is the step of preheating both the laminated core 4d attached to the jig 20 and the jig 20 so that the temperature of each of the laminated core 4d and the jig 20 becomes the temperature T3. Specifically, the preheating is performed so that the temperature of at least the pressing plate 23 and the lower plate 24 becomes the temperature T3.

Since the jig 20 has thus been heated to the temperature T3 in addition to the laminated core 4d, the volatile organic compound contained in the resin material 6 that comes into contact with the jig 20 can be easily volatilized.

Subsequently, a melting step of melting the resin material 6 in the resin injection device 103 is performed in step S4. Specifically, the resin material 6 that is in a solid state at normal temperature is melted by heating at the temperature T1 in the resin injection device 103. The melting step may be performed, for example, before the preheating step (S3).

Subsequently, the injection step of injecting the resin material 6 into the magnet housing portions 10 of the laminated core 4d is performed in step S5. Specifically, the injection step is the step of injecting the molten resin material 6 into the magnet housing portions 10 of the laminated core 4d heated to the temperature T3 by the preheating step. The injection step is also the step of injecting the resin material 6 into the magnet housing portions 10 with the laminated core 4d pressed in the axial direction by the jig 20.

In the present embodiment, the injection step is the step of injecting the resin material 6 into the magnet housing portions 10 while volatilizing the volatile organic compound by heating the resin material 6 by bringing the resin material 6 into contact with the laminated core 4d heated to the temperature T3, and while releasing the volatilized volatile organic compound to the outside of the magnet housing portions 10. Specifically, the resin material 6 ejected from the resin injection device 103 (see FIG. 8) is heated to the temperature T3 by contacting the laminated core 4d, pressing plate 23, and lower plate 24 heated to the temperature T3. As a result, the volatile organic compound contained in the resin material 6 is volatilized. The volatilized volatile organic compound is discharged together with air inside the magnet housing portions 10 to the outside of the magnet housing portions 10.

The volatile organic compound contained in the resin material 6 can thus be volatilized and released to the outside of the magnet housing portions 10 in the injection step before the resin material 6 is heated in the fixing step that will be described below. As a result, since the volatile organic compound has thus been released, the volatile organic compound can be prevented from being volatilized when the resin material 6 is done in the fixing step after the injection step. The volatilized volatile organic compound can thus be prevented from remaining as bubbles inside the resin material 6 without escaping to the outside of the resin material 6. As a result, the force for fixing the permanent magnets 5 can be increased in the rotor core 4 in which the resin material 6 containing the volatile organic compound has been injected into the laminated core 4d.

Since the volatile organic compound can be prevented from remaining as bubbles inside the resin material 6, the resin material 6 can be prevented from leaking through the gaps in the laminated core 4d (from between the electrical steel plates 4a) and from between the laminated core 4d and the jig 20 due to expansion of the volume of the resin material 6 caused by volatilization of the volatile organic compound. This can save the trouble of removing the leaked resin material 6.

Since the laminated core 4d is preheated at a temperature lower than the temperature T4 that is the heating temperature of the resin material 6 in the fixing step, the resin material 6 can be prevented as much as possible from curing during injection of the resin material 6.

In the present embodiment, the injection step is the step of injecting the resin material 6 into the magnet housing portions 10 with the laminated core 4d pressed in the axial direction by the jig 20 (pressing plate 23 and lower plate 24), while releasing the volatilized volatile organic compound to the outside of the magnet housing portions 10 through each of the gas release grooves 23c (see FIG. 6) in the pressing plate 23 and the gas release grooves 24e (see FIG. 6) in the lower plate 24.

Since the gas release grooves (23c, 24e) are provided in both the pressing plate 23 and the lower plate 24, the volatilized volatile organic compound can be more easily released to the outside of the magnet housing portions 10 through the gas release grooves (23c, 24e).

A part of the volatilized volatile organic compound is discharged through the resin injection holes 23b of the pressing plate 23. A part of the volatilized volatile organic compound is also discharged to the outside of the laminated core 4d from between the electrical steel sheets 4a. The gaps between the electrical steel sheets 4a are reduced as the laminated core 4d is pressed by the jig 20. Therefore, the resin material 6 injected into the magnet housing portions 10 does not leak from between the electrical steel sheets 4a. As described above, since the depth D (see FIG. 6) of the gas release grooves 23c (24e) is small, the resin material 6 injected into the magnet housing portions 10 does not leak through the gas release grooves 23 c (24e).

The fixing step of fixing the permanent magnets 5 inside the magnet housing portions 10 by heating the resin material 6 injected in the magnet housing portions 10 at a temperature equal to or higher than the temperature T2 (temperature at which the resin material 6 starts to cure) and curing the resin material 6 is performed in step S6. Specifically, the laminated core 4d with the resin material 6 injected in the magnet housing portions 10 is moved together with the jig 20 to the curing heating device 104 provided separately from the resin injection device 103. Thereafter, the laminated core 4d and the jig 20 are heated in the curing heating device 104 at the temperature T4 higher than the temperature T3 that is the heating temperature in the preheating step (and the temperature T2). The resin material 6 injected in the magnet housing portions 10 is thus thermally cured.

### (Experimental Results 1)

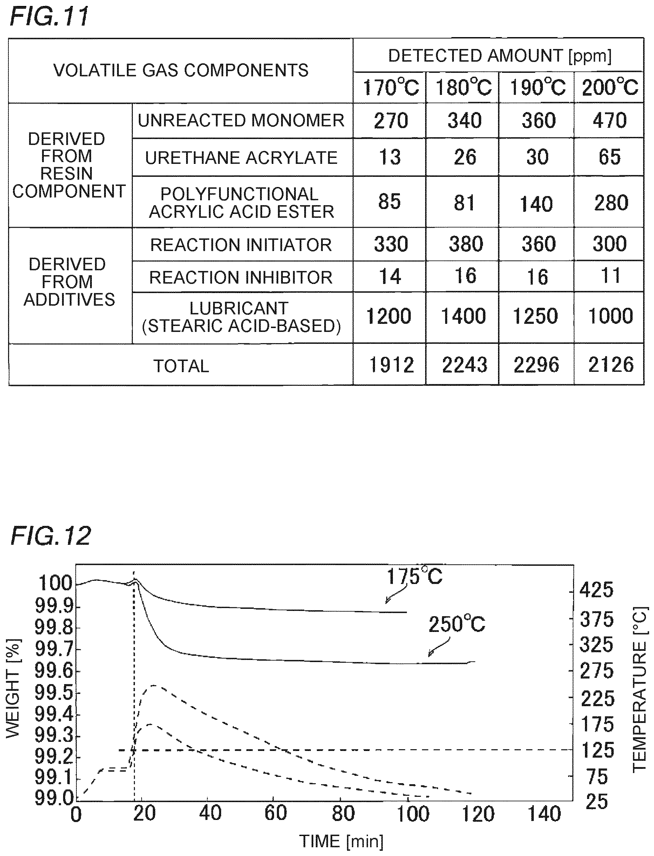

The results of experiments in which the relationship between the heating temperature of the resin material 6 and the volatilized volatile organic compound was examined will be described with reference to FIG. 11.

As shown in FIG. 11, in the experiments, volatile gas detected when the resin material 6 was heated at the temperatures of 170°C, 180°C, 190°C, and 200°C for 20 minutes was measured with a gas chromatography mass spectrometry. As a result of the measurement, it was detected that the components of the volatile gas (volatile organic compound) included an unreacted monomer, urethane acrylate, and polyfunctional acrylic ester as components derived from a resin component. It was also detected that the components of the volatile gas included a reaction initiator, a reaction inhibitor, and a lubricant (mold release agent) (stearic acid-based) as components derived from additives.

As a result of the experiments, it was confirmed that the main components of the volatile gas volatilized at the above temperatures were the unreacted monomer, the reaction initiator, and the lubricant. It was also confirmed that the lubricant accounted for over half (nearly half even at 200°C) of the volatile gas. That is, it was confirmed that it is necessary to release the lubricant in order to prevent bubbles from remaining in the resin material 6.

### (Experimental Results 2)

The results of thermogravimetric analysis experiments in which changes in weight of the resin material 6 were detected while changing the heating temperature of the resin material 6 will be described with reference to FIG. 12. In FIG. 12, solid lines mean a change in weight over time, and dashed lines mean a change in temperature over time.

The pattern of the heating temperature will be described. First, the heating temperature is increased from 25°Cto 80°C (at 10°C/min) and then kept at 80°Cfor 10 minutes. Thereafter, the heating temperature is increased from 80°C to 175°C (or 250°C) and then kept at 175°C (250°C) for 5 minutes. Subsequently, the heating temperature is lowered from 175°C (250°C) to 25°C (at -5°C/min). As a result, it was confirmed that, in both of the cases where the maximum value of the heating temperature was 175°C and 250°C, the weight of the resin material 6 decreased when the heating temperature exceeded 125°C. Although not shown for simplicity, it was also confirmed that, even in the case where the maximum value of the heating temperature was other than 175°C and 250°C (165°C, 185°C, 200°C, 270°C), the weight of the resin material 6 decreased when the heating temperature exceeded 125°C. That is, it was confirmed that the volatile organic compound of the resin material 6 was volatilized when the heating temperature exceeded 125°C. In other words, it was confirmed that the volatile organic compound was sufficiently volatilized by setting the temperature T3 that is the heating temperature in the preheating step to 140°C.

### [Effects of Embodiment]

The following effects can be obtained with the present embodiment.

In the present embodiment, as described above, the injection step is the step of injecting the resin material (6) into the magnet housing portions (10) while volatilizing the volatile organic compound by heating the resin material (6) by bringing the resin material (6) into contact with the laminated core (4d) heated to the third temperature (T3), and while releasing the volatilized volatile organic compound to the outside of the magnet housing portions (10).

The volatile organic compound contained in the resin material (6) can thus be volatilized and released to the outside of the magnet housing portions (10) in the injection step before the resin material (6) is heated in the fixing step. As a result, since the volatile organic compound has thus been released, the volatile organic compound can be prevented from being volatilized when the resin material (6) is heated in the fixing step after the injection step. The volatilized volatile organic compound can thus be prevented from remaining as bubbles inside the resin material (6) without escaping to the outside of the resin material (6). As a result, the force for fixing the permanent magnets (5) can be increased in the rotor core (4) in which the resin material (6) containing the volatile organic compound has been injected into the laminated core (4d).

Since the volatile organic compound can be prevented from remaining as bubbles inside the resin material (6), the resin material (6) can be prevented from leaking through the gaps in the laminated core (4d) (the resin material (6) from between the electrical steel plates (4a) due to expansion of the volume of the resin material (6) caused by volatilization of the volatile organic compound. In the case where the jig (20) (die) for pressing the laminated core (4d) is used, the resin material (6) can be prevented from leaking from between the jig (20) (die) and the laminated core (4d). This can save the trouble of removing the leaked resin material (6).

Since the laminated core (4d) is preheated at a temperature lower than the fourth temperature (T4) that is the heating temperature of the resin material (6) in the fixing step, the resin material (6) can be prevented as much as possible from curing during injection of the resin material (6).

In the present embodiment, as described above, the preheating step is the step of preheating the laminated core (4d) in such a manner that the temperature of the laminated core (4d) becomes the third temperature (T3) that is higher than the first temperature (T1) at which the resin material (6) starts to melt and lower than the fourth temperature (T4).

With this configuration, since the laminated core (4d) is preheated at the third temperature (T3) higher than the first temperature (T1) at which the resin material (6) starts to melt, the temperature of the laminated core (4d) can be relatively quickly raised and the resin material (6) can be quickly thermally cured in the fixing step. Therefore, the resin material (6) can be relatively quickly cured in the fixing step while preventing, as much as possible, the resin material (6) from curing during injection of the resin material (6).

In the present embodiment, as described above, the preheating step is the step of preheating the laminated core (4d) in such a manner that the temperature of the laminated core (4d) becomes the third temperature (T3) that is equal to or higher than the second temperature (T2) and lower than the fourth temperature (T4), the second temperature (T2) being a temperature higher than the first temperature (T1) at which the resin material (6) starts to melt and being a temperature at which the resin material (6) starts to cure.

With this configuration, since the laminated core (4d) is preheated at the third temperature (T3) higher than the second temperature (T2) at which the resin material (6) starts to cure, the temperature of the laminated core (4d) can be more quickly raised and the resin material (6) can be more quickly thermally cured in the fixing step.

In the present embodiment, as described above, the preheating step is the step of preheating the laminated core (4d) in such a manner that the temperature of the laminated core (4d) becomes the third temperature (T3) that is closer to the second temperature (T2) at which the resin material (6) starts to cure than the middle temperature between the second temperature (T2) and the fourth temperature (T4).

With this configuration, the resin material (6) can be more reliably prevented from curing during injection of the resin material (6) than in the case the heating temperature in the preheating step is closer to the fourth temperature (T4) than the middle temperature between the second temperature (T2) and the fourth temperature (T4).

In the present embodiment, as described above, the injection step is the step of injecting the resin material (6) into the magnet housing portion (10) with the laminated core (4d) pressed in an axial direction of the laminated core (4d) by the pressing portion (20) including the jig (20) or the die, and the preheating step is the step of preheating both the laminated core (4d) pressed by the pressing portion (20) and the pressing portion (20) in such a manner that the temperature of the laminated core (4d) and the temperature of the pressing portion (20) become the third temperature (T3).

With this configuration, since the pressing portion (20) is heated to the third temperature (T3) in addition to the laminated core (4d), the volatile organic compound contained in the resin material (6) that comes into contact with the pressing portion (20) can be easily volatilized.

In the present embodiment, as described above, the injection step is the step of injecting the resin material (6) into the magnet housing portions (10) while releasing the volatilized volatile organic compound to the outside of the magnet housing portions (10) through the gas release grooves (23c, 24e) provided in the pressing portion (20) and connected to the magnet housing portions (10).

With this configuration, the volatilized volatile organic compound can be easily released to the outside of the magnet housing portions (10) through the gas release grooves (23c, 24e).

In the present embodiment, as described above, the injection step is the step of, with the laminated core (4d) pressed in the axial direction by the pressing portion (20) including the jig (20) including a plate on one side (23) and a plate on the other side (24), injecting the resin material (6) into the magnet housing portions (10) while releasing the volatilized volatile organic compound to the outside of the magnet housing portions (10) through the gas release grooves (23c, 24e) provided in each of the plate on one side (23) and the plate on the other side (24), the plate on one side (23) pressing the laminated core (4d) from the one side in the axial direction, and the plate on the other side (24) supporting the laminated core (4d) from the other side in the axial direction.

With this configuration, since the gas release grooves (23c, 24e) are provided in both the plate on one side (23) and the plate on the other side (24), the volatilized volatile organic compound can be more easily released to the outside of the magnet housing portions (10) through the gas release grooves (23c, 24e).

### [Modifications]

The embodiment disclosed herein should be construed as illustrative in all respects and not restrictive. The scope of the present invention is defined by the claims rather than by the above description of the embodiment, and includes all changes (modifications) that fall within the meaning and scope equivalent to the claims.

For example, the above embodiment illustrates an example in which the temperature T3 (third temperature) that is the heating temperature in the preheating step is higher than the temperature T2 (second temperature) at which the resin material 6 starts to cure. However, the present invention is not limited to this. The temperature T3 may be equal to or lower than the temperature T2.

The above embodiment illustrates an example in which the temperature T4 (fourth temperature) that is the heating temperature in the fixing step is higher than the temperature T2 (second temperature) at which the resin material 6 starts to cure. However, the present invention is not limited to this. The temperature T4 may be equal to the temperature T2.

The above embodiment illustrates an example in which the temperature T3 (third temperature) that is the heating temperature in the preheating step is closer to the temperature T2 (second temperature) at which the resin material 6 starts to cure than the middle temperature between the temperature T2 and the temperature T4 (fourth temperature) that is the heating temperature in the fixing step. However, the present invention is not limited to this. The temperature T3 (third temperature) may be closer to the temperature T4 than the middle temperature between the temperature T2 and the temperature T4.

The above embodiment illustrates an example in which the laminated core 4d is pressed by the jig 20 (pressing portion). However, the present invention is not limited to this. For example, the laminated core 4d may be pressed by a die. For example, the die may be a die provided in the resin injection device 103. In this case, the gas release grooves through which the volatilized volatile organic compound is released are provided in the die.

The above embodiment illustrates an example in which, with the laminated core 4d pressed by the jig 20, the laminated core 4d is preheated together with the jig 20. However, the present invention is not limited to this. For example, the laminated core 4d may be preheated alone.

The above embodiment illustrates an example in which the gas release grooves (23c, 24e) are provided in both the pressing plate 23 (plate on one side) and the lower plate 24 (plate on the other side). However, the present invention is not limited to this. For example, the gas release grooves may be provided in only either the pressing plate 23 (plate on one side) or the lower plate 24 (plate on the other side).

### Description of the Reference Numerals

4 ... rotor core, 4a ... electrical steel sheet, 4d ... laminated core, 5 ... permanent magnet, 6 ... resin material, 10 ... magnet housing portion, 20 ... jig (pressing portion), 23 ... pressing plate (plate on one side), 24 ... lower plate (plate on the other side), 23c, 24e ... gas release groove, T1 ... temperature (first temperature), T2 ... temperature (second temperature), T3 ... temperature (third temperature), T4 ... temperature (fourth temperature)

## Claims

1. A method for manufacturing a rotor core including a laminated core in which a plurality of electrical steel plates is stacked and that includes a magnet housing portion extending in a stacking direction of the electrical steel plates, a permanent magnet placed in the magnet housing portion, and a thermosetting resin material that fixes the permanent magnet inside the magnet housing portion, that is solid at normal temperature and starts to melt at a first temperature higher than the normal temperature, and that starts to cure at a second temperature higher than the first temperature, the method comprising:
a preheating step of preheating the laminated core in such a manner that a temperature of the laminated core becomes a third temperature that is equal to or higher than a volatilization temperature of a volatile organic compound contained in the resin material;
an injection step of injecting the resin material in a molten state into the magnet housing portion of the laminated core heated to the third temperature by the preheating step; and
a fixing step of thermally curing the resin material and fixing the permanent magnet inside the magnet housing portion by heating the resin material injected in the magnet housing portion at a fourth temperature higher than the third temperature, wherein
the injection step is a step of injecting the resin material into the magnet housing portion while volatilizing the volatile organic compound by heating the resin material by bringing the resin material into contact with the laminated core heated to the third temperature, and while releasing the volatilized volatile organic compound to outside of the magnet housing portion.

2. The method for manufacturing a rotor core according to claim 1, wherein the preheating step is a step of preheating the laminated core in such a manner that the temperature of the laminated core becomes the third temperature that is higher than the first temperature at which the resin material starts to melt and lower than the fourth temperature.

3. The method for manufacturing a rotor core according to claim 2, wherein the preheating step is a step of preheating the laminated core in such a manner that the temperature of the laminated core becomes the third temperature that is equal to or higher than the second temperature and lower than the fourth temperature, the second temperature being a temperature higher than the first temperature at which the resin material starts to melt and being a temperature at which the resin material starts to cure.

4. The method for manufacturing a rotor core according to claim 3, wherein the preheating step is a step of preheating the laminated core in such a manner that the temperature of the laminated core becomes the third temperature that is closer to the second temperature at which the resin material starts to cure than a middle temperature between the second temperature and the fourth temperature.

5. The method for manufacturing a rotor core according to any one of claims 1 to 4, wherein
the injection step is a step of injecting the resin material into the magnet housing portion with the laminated core pressed in an axial direction of the laminated core by a pressing portion including a jig or a die, and
the preheating step is a step of preheating both the laminated core pressed by the pressing portion and the pressing portion in such a manner that the temperature of the laminated core and a temperature of the pressing portion become the third temperature.

6. The method for manufacturing a rotor core according to claim 5, wherein the injection step is a step of injecting the resin material into the magnet housing portion while releasing the volatilized volatile organic compound to the outside of the magnet housing portion through a gas release groove provided in the pressing portion and connected to the magnet housing portion.

7. The method for manufacturing a rotor core according to claim 6, wherein the injection step is a step of, with the laminated core pressed in the axial direction by the pressing portion including the jig including a plate on one side and a plate on the other side, injecting the resin material into the magnet housing portion while releasing the volatilized volatile organic compound to the outside of the magnet housing portion through the gas release groove provided in each of the plate on one side and the plate on the other side, the plate on one side pressing the laminated core from one side in the axial direction, and the plate on the other side supporting the laminated core from the other side in the axial direction.
